# EUROPÄISCHE PATENTANMELDUNG

(11) **EP 4 825 160 A1**
(43) Veröffentlichungstag der Anmeldung: **21.10.2026**
(21) Anmeldenummer: 26169000.2
(22) Anmeldetag: 30.03.2026
(51) Int. Cl.: A01G 9/033, B32B 5/26, E04D 11/00, E04D 13/04, A01G 20/20

(54) **TEXTIL-ANORDNUNG ZUR LEISTUNGSSTARKEN PASSIVEN DACHBEGRÜNUNGS-BEWÄSSERUNG**

(30) Priorität: 17.04.2025 DE 102025115257
(71) Anmelder: Zinco GmbH, 72622 Nürtingen (DE)
(72) Erfinder: WALKER, Ralf, 72555 Metzingen (DE)
(74) Vertreter: Kohler Schmid Möbus Patentanwälte

(57) **Zusammenfassung**

Die Erfindung betrifft eine Textil-Anordnung (30) zur Bewässerung einer Flachdach-Begrünung. Die Textil-Anordnung (30) weist ein erstes Textil (24a) auf einem ersten Spacerblock (26a) auf, wobei sich das erste Textil (24a) zumindest an einer Stirnseite (51c) des ersten Spacerblocks (26a), vorzugsweise an mehreren Stirnseiten (51c-f), insbesondere an allen Stirnseiten (51c-f), nach unten erstreckt, um angestautes Wasser auf einem Flachdach (10) durch Kapillarkräfte ansaugen zu können. Das erste Textil (24a) ist besonders saugfähig, da es vernetzte Mikrofilamente (54a, b) aufweist, die im Querschnitt die Form einer mehrere Pizzastücke aufweisenden Pizza aufweist oder im Querschnitt sternförmig ausgebildet ist. Die Mikrofilamente (54a, b) können zumindest teilweise untereinander verschweißt sein. Vorzugsweise ist unmittelbar auf dem ersten Textil (24a) ein Substrat (22) zum Anpflanzen einer Pflanze (12) angehäuft. In weiter bevorzugter Ausgestaltung der Erfindung sind mehrere Spacerblocks (26a, b) mit jeweils einem hier beschriebenen, vorzugsweise gleichen, Textil (24a, b) versehen und untereinander verbunden, um einen großflächigen, insbesondere spaltfreien, Verbund zu bilden.

## Beschreibung

### Hintergrund der Erfindung

Die Erfindung betrifft eine Textil-Anordnung zur Begrünung eines Flachdachs. Die Erfindung betrifft weiterhin ein Flachdach mit einer solchen Textil-Anordnung sowie ein Verfahren zur Herstellung einer solchen Textil-Anordnung und die Verwendung einer solchen Textil-Anordnung zum Anpflanzen einer Pflanze.

Aufgrund des Klimawandels und damit einhergehende lange Trockenphasen müssen Dachbegrünungen in der Lage sein, dort eingesetzte Pflanzen auch dann mit Wasser zu versorgen, wenn es längere Zeit nicht regnet. Weiterhin müssen aufgrund des Klimawandels zukünftig Dachbegrünungen in der Lage sein, große Wassermengen zu speichern und über die Bepflanzung verdunsten zu lassen, um Städte in Hitzephasen zu kühlen.

Eine Möglichkeit, Pflanzen zu bewässern, ist, diese mittels einer Pumpe - aktiv - mit Wasser zu versorgen. Für die Pumpe muss jedoch Energie eingesetzt werden. Weiterhin ist eine Pumpe mit vielen beweglichen Bauteilen störungs- und reparaturanfällig.

Es wurden daher Retentionssysteme entwickelt, bei denen Pflanzen erhöht auf einem Wasserspeicher angeordnet werden, wobei in den Wasserspeicher Textilien hängen, deren Kapillarkräfte - passiv - das Wasser nach oben, hin zu den Pflanzen ziehen. Nachteilig an diesen Retentionssystemen ist allerdings, dass die Rate, mit der das Wasser gefördert wird, nicht dazu ausreicht, intensive Bepflanzungen zu bewässern, geschweige denn dazu ausreicht, die erforderlichen Verdunstungsraten für die Stadtkühlung bereit zu stellen. Glasfasern oder dergleichen einzusetzen ist zwar grundsätzlich möglich, führt jedoch zu unerwünschten Abfallgemischen bei der Entsorgung eines solchen Retentionssystems. Naturfasern wiederum verrotten und weisen nur eine geringe Lebensdauer auf.

Über mehr als 15 Jahre wurden verschiedene Textilien getestet, bislang jedoch keines gefunden, das den Anforderungen gerechte Kapillarkräfte aufweist.

### Aufgabe der Erfindung

Es ist daher Aufgabe der Erfindung, auf passive Art und Weise, eine hohe Bewässerungsrate für eine Dachbegrünung bereit zu stellen.

### Beschreibung der Erfindung

Diese Aufgabe wird erfindungsgemäß gelöst durch eine Textilanordnung nach Patentanspruch 1, ein Flachdach gemäß Patentanspruch 10, ein Verfahren gemäß Patentanspruch 11 sowie eine Verwendung gemäß Patentanspruch 12. Die abhängigen Patentansprüche geben bevorzugte Weiterbildungen wieder.

Die erfindungsgemäße Aufgabe wird somit gelöst durch eine Textil-Anordnung zur Flachdach-Begrünung, die Folgendes aufweist:
a) Einen ersten Spacerblock;
b) ein erstes Textil, das sich auf der Oberseite des ersten Spacerblocks erstreckt und sich an einer ersten Stirnseite des ersten Spacerblocks nach unten erstreckt, wobei das erste Textil vernetzte Mikrofilamente aufweist, die zumindest teilweise aus Polyester bestehen.

Die erfindungsgemäße Textil-Anordnung erlaubt eine hohe Wassernachlieferungsrate bei großen Höhendifferenzen von beispielsweise 20 cm von täglich bis zu 2,5 l/m², was mit bisher bekannten Kapillarstrukturen in dieser Höhe nicht möglich war. Bei einer Höhendifferenz von 15 cm werden sogar Nachlieferungen von bis zu 4,5 l/m² und Tag erreicht.

Unter einem Spacerblock wird dabei ein, vorzugsweise quaderförmiger, Volumenkörper verstanden, der vorzugsweise eine Vielzahl von Durchgangsausnehmungen aufweist, um von auf einem Flachdach gestautem Wasser durchdrungen zu werden. Ein Spacerblock kann einstückig, mehrteilig und/oder aus Kunststoff ausgebildet sein. Ein Spacerblock ist vorzugsweise dazu ausgebildet, ein auf ihm angeordnetes Textil von einem Boden, auf dem der Spacerblock aufliegt, zu beabstanden. Mithin kann unter dem Textil mittels des Spacerblocks Wasser gespeichert werden. Mehrere gekoppelte Spacerblöcke ermöglichen das erwünschte Retentionsvolumen.

Die Oberseite des ersten Spacerblocks kann mehreckig, insbesondere rechteckförmig, vorzugsweise quadratisch, ausgebildet sein. Die Länge und Breite der rechteckförmigen Oberseite betragen vorzugsweise zwischen 0,2m und 2m, insbesondere zwischen 0,4m und 1,0m. Die vertikale Dicke des ersten Spacerblocks beträgt vorzugsweise zwischen 0,05m und 0,4m, insbesondere zwischen 0,08m und 0,25m.

Unter einem Textil wird eine, insbesondere erdberührte, flexible Textilstruktur, insbesondere in Form eines Geotextils, verstanden. Das Textil kann unverrottbar sein. Das Textil sollte vorzugsweise wasserdurchlässig sein. Das Textil kann in Form eines Vlieses ausgebildet sein. Das Textil ist vorzugsweise dazu ausgebildet, Wasser an ein auf dem Textil angeordnetes Substrat zum Bewässern einer Pflanze zu leiten.

Die hier gewählten Bezeichnungen "oben", "unten", "auf" etc. beziehen sich auf den montierten Zustand der Textil-Anordnung auf einem Flachdach. Mit "auf" ist "oberhalb", vorzugsweise "unmittelbar auf", gemeint.

Das Polyester kann in Form von Polyethylenterephthalat (PET) vorliegen.

Das erste Textil kann zu mehr als 70%, insbesondere zu mehr als 90%, aus Polyester ausgebildet sein.

Die Mikrofilamente können untereinander lösungsmittelfrei und bindemittelfrei verbunden sein. Hierdurch ist das erste Textil leichter recycelbar.

Das erste Textil kann aus Mikrofilamenten bestehen, sodass es besonders saugfähig ist.

Das erste Textil erstreckt sich vorzugsweise an mehreren Stirnseiten des ersten Spacerblocks nach unten, um ins Wasser ragen zu können. Besonders bevorzugt erstreckt sich das erste Textil an allen Stirnseiten des ersten Spacerblocks nach unten.

Die Stirnseiten erstrecken sich vorzugsweise zwischen der größeren Oberseite und der größeren Unterseite des ersten Spacerblocks. Das erste Textil erstreckt sich vorzugsweise bis an die Unterseite an der/den Stirnseite(n) nach unten.

Das erste Textil kann zugeschnitten sein, insbesondere in Form des Spacerblocks mit jeweils einem Lappen an den Seiten. Das erste Textil kann dadurch einfach auf dem ersten Spacerblock angeordnet werden.

In besonders bevorzugter Ausgestaltung der Erfindung sind die Mikrofilamente im Querschnitt sternförmig oder pizzaförmig (insgesamt kreisförmig mit dreieckförmigen Einzelstücken) ausgebildet. Das erste Textil weist in diesen Fällen besonders große Kapillarkräfte auf.

Wenn die Mikrofilamente aus zwei Komponenten ausgebildet sind, lassen sich die Mikrofilamente besonders großvolumig aufspleißen.

Besonders bevorzugt kann das erste Textil Polyester und Polyamid (PA), insbesondere in Form von Polyamid 6, aufweisen, vorzugsweise aus Polyester und PA bestehen.

Die Mikrofilamente weisen vorzugsweise eine Dicke zwischen 100nm und 500nm auf. In weiter bevorzugter Ausgestaltung der Erfindung weisen die Mikrofilamente eine Feinheit zwischen 0,01dtex und 1dtex auf.

Das erste Textil kann eine Durchgangsausnehmung aufweisen, wobei die Textil-Anordnung ein Befestigungsmittel, beispielsweise einen Pin, aufweist, das durch eine Durchgangsausnehmung des ersten Textils geführt und am ersten Spacerblock fixiert ist. Hierdurch kann eine Einheit aus erstem Spacerblock und erstem Textil handlich auf dem Flachdach verlegt werden.

Die Durchgangsausnehmung kann in Form einer Bohrung oder zumindest eines Schlitzes, beispielsweise eines Kreuzschlitzes, ausgebildet sein.

Die Durchgangsausnehmung kann mittig im ersten Textil ausgebildet sein, um ein Verrutschen des ersten Textils auf dem ersten Spacerblock effektiv zu verhindern.

Weiter bevorzugt ist das erste Textil bohrfest ausgebildet, sodass es leicht mit spanenden Werkzeugen bearbeitbar ist, ohne am Werkzeug hängen zu bleiben.

Um die Saugfähigkeit bzw. Kapillarität der Textil-Anordnung weiter zu erhöhen, kann das erste Textil einseitig oder beidseitig mit einer - über einen schmalen

Spalt zu den Mikrofilamenten beabstandeten -Folie versehen sein. Die Folie kann Polyester aufweisen, insbesondere aus Polyester ausgebildet sein.

Die Textil-Anordnung kann oberhalb des ersten Textils ein Substrat zum Anpflanzen einer Pflanze aufweisen. Als Substrat kann beispielsweise eine Mischung aus Bims, Lava und Kompost eingesetzt werden. Das Substrat ist vorzugsweise blasbar.

In besonders bevorzugter Ausgestaltung der Erfindung ist das Substrat unmittelbar auf dem ersten Textil angeordnet. Durch diesen Verzicht auf eine flexible Textilstruktur ("Filtervlies") zwischen dem ersten Textil und dem Substrat kann das Substrat bei einfachem Gesamtaufbau auf besonders effiziente Art und Weise von unten her bewässert werden. Hierbei übernimmt das erste Textil die Funktion der Filterschicht, um ein Auswaschen von Feinteilen aus dem Substrat zu verhindern.

Die Textil-Anordnung kann einen zweiten Spacerblock aufweisen, der mit dem ersten Spacerblock verbunden ist. Auf der Oberseite des zweiten Spacerblocks kann ein zweites Textil angeordnet sein, das sich an einer ersten Stirnseite des zweiten Spacerblocks nach unten erstreckt. Mithin können zwischen den Stirnseiten des ersten Spacerblocks und des zweiten Spacerblocks das erste Textil und das zweite Textil angeordnet, insbesondere eingeklemmt, sein. Das zweite Textil kann vernetzte Mikrofilamente aufweisen, die zumindest teilweise aus Polyester bestehen.

Der zweite Spacerblock ist vorzugsweise unmittelbar mit dem ersten Spacerblock verbunden.

Das erste Textil kann eine Spacer-Durchgangsausnehmung aufweisen und das zweite Textil kann eine weitere Spacer-Durchgangsausnehmung aufweisen, um den ersten Spacerblock leicht mit dem zweiten Spacerblock verbinden zu können.

Das zweite Textil ist vorzugsweise identisch zum ersten Textil. Vorzugsweise weist die Textil-Anordnung eine Vielzahl von Textilien, insbesondere mehr als drei Textilien, auf, die vorzugsweise identisch zum ersten Textil ausgebildet sind.

Der zweite Spacerblock ist vorzugsweise identisch zum ersten Spacerblock. Die Textil-Anordnung kann eine Vielzahl von Spacerblocks aufweisen, insbesondere mehr als drei Spacerblocks. Die Spacerblocks sind vorzugsweise identisch zum ersten Spacerblock ausgebildet.

Die Textil-Anordnung kann ein knochenförmiges Blockverbindungsmittel mit zwei sich gegenüberliegenden Schwalbenschwänzen aufweisen, das den ersten Spacerblock mit dem zweiten Spacerblock verbindet.

Der erste Spacerblock und der zweite Spacerblock können jeweils eine sich zum Rand des jeweiligen Spacerblocks hin verjüngende Ausnehmung aufweisen, in die das Blockverbindungsmittel einführbar ist. Das Blockverbindungsmittel, der erste Spacerblock und der zweite Spacerblock sind vorzugsweise derart ausgebildet, dass die beiden Spacerblocks aufeinander zu verspannt werden, wenn das Blockverbindungsmittel in die Ausnehmungen eingeführt wird. Hierdurch wird verhindert, dass Substrat in einen Spalt zwischen die Spacerblocks rieselt.

Vorzugsweise weist der erste Spacerblock eine Vielzahl von Röhren auf, die über Streben miteinander verbunden sind. Alternativ oder zusätzlich dazu kann der erste Spacerblock aus Kunststoff und/oder einstückig ausgebildet sein. Hierdurch kann der erste Spacerblock stabil und kosteneffektiv gefertigt werden.

Die erfindungsgemäße Aufgabe wird weiterhin gelöst durch ein Flachdach mit einer hier beschriebenen Textil-Anordnung.

Besonders bevorzugt kann eine Flachdachfläche nahezu vollständig oder vollständig mit verbundenen Spacerblocks ausgelegt sein. Hierdurch wird ein Verrutschen des Spacerblock-Verbunds effektiv verhindert.

Weiterhin wird die erfindungsgemäße Aufgabe gelöst durch ein Verfahren zur Herstellung einer hier beschriebenen Textil-Anordnung mit folgenden Verfahrensschritten:
A) Spinnen von Endlos-Filamenten, die Polyester aufweisen;
B) Ablegen der Endlos-Filamente auf einem Band;
C) Splitten und Verfestigen der Endlos-Filamente mit Hochdruck-Wasserstrahlen zu den vernetzten Mikrofilamenten;
D) Anordnen des ersten Textils mit den vernetzten Mikrofilamenten auf dem ersten Spacerblock.

Unter "Hochdruck" werden insbesondere Drücke zwischen 50bar und 500bar, vorzugsweise zwischen 100bar und 400bar, besonders bevorzugt zwischen 200bar und 350bar, verstanden.

Das Verfahren kann nach dem Verfahrensschritt D) weiterhin folgenden Verfahrensschritt aufweisen:
H) Auftragen, insbesondere Aufblasen, des Substrats auf dem ersten Textil.

Vor, nach oder zwischen den Verfahrensschritten A) bis H) kann ein weiterer Verfahrensschritt oder können weitere Verfahrensschritte durchgeführt werden.

Vorzugsweise wird Polyester aus PE-Recycling-Flaschen eingesetzt.

Die erfindungsgemäße Aufgabe wird schließlich gelöst durch die Verwendung einer hier beschriebenen Textil-Anordnung als Unterlage für ein Substrat zum Anpflanzen einer Pflanze, insbesondere auf einem Flachdach.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt schematisch eine Seitenansicht eines Flachdachs mit einer Textil-Anordnung, wobei die Textil-Anordnung zwei miteinander verbundene Spacerblocks aufweist, auf denen jeweils ein Textil als Träger von Substrat zur Dachbegrünung angeordnet ist.
- Fig. 2a: zeigt eine perspektivische Ansicht eines zugeschnittenen ersten Textils.
- Fig. 2b: zeigt eine Draufsicht auf das Textil aus Fig. 2a.
- Fig. 3: zeigt eine Draufsicht auf eine Textil-Anordnung, wobei ein erster Spacerblock mit einem ersten Textil bedeckt ist und ein zweiter Spacerblock nicht mit einem Textil bedeckt ist, um die Verbindung der beiden Spacerblocks besser erläutern zu können.
- Fig. 4: zeigt eine perspektivische Ansicht einer Textil-Anordnung mit einem ersten Spacerblock, einem darauf angeordneten ersten Textil sowie einer Halterung.
- Fig. 5: zeigt eine Rasterelektronenmikroskopieaufnahme eines ersten Textils in 50-facher Vergrößerung, aus der Mikrofilamente des ersten Textils ersichlich sind.
- Fig. 6: zeigt perspektivisch eine weiter vergrößerte Aufnahme einiger Mikrofilamente aus Fig. 5.
- Fig. 7: zeigt Verfahrensschritte zur Herstellung einer Textil-Anordnung.

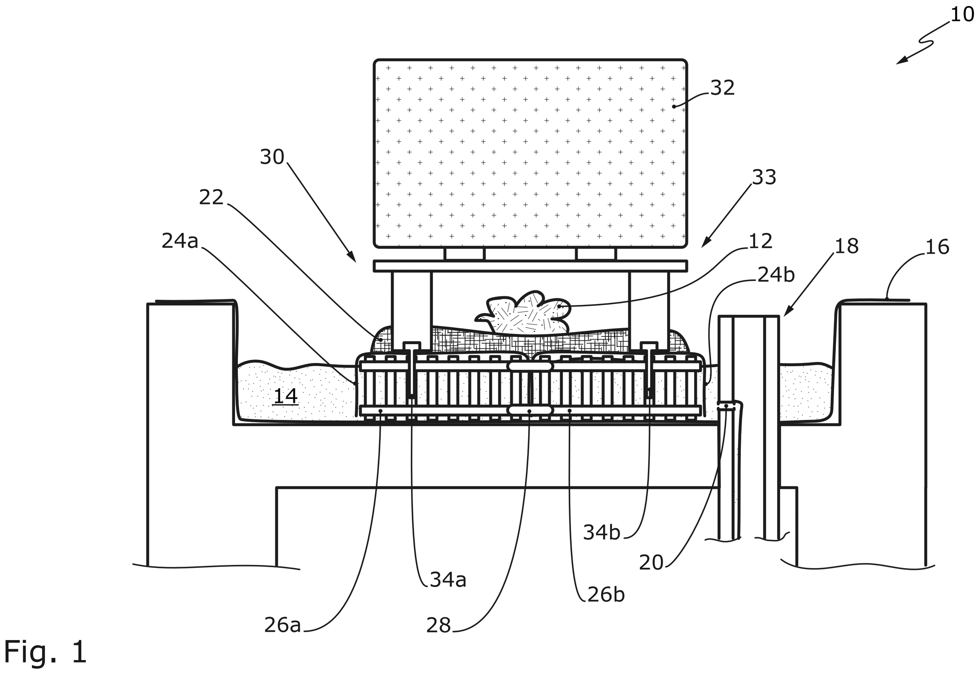

**Fig. 1** zeigt ein Flachdach **10**, das mit einer Pflanze **12** begrünt ist. Um die Pflanze 12 möglichst kontinuierlich bewässern zu können, wird auf dem Flachdach 10 Wasser **14** gespeichert. Hierzu ist auf dem Flachdach 10 eine Abdichtung **16**, insbesondere aus Bitumen oder Kunststoff, verlegt. Ein Ablauf **18** mit Anstauvorrichtung ist erhöht angeordnet, um das Wasser 14 zu stauen. Vorzugsweise ist am Ablauf 18 eine Drossel **20**, insbesondere in Form einer steuerbaren Drossel, vorgesehen, um einen kontrollierten Ablauf des Wassers 14 zur Starkregenvorsorge zu ermöglichen.

Die Pflanze 12 wurzelt in einem Substrat **22**. Das Substrat 22 ist auf einem ersten Textil **24a** und einem zweiten Textil **24b** angeordnet. Vorzugsweise ist das Substrat 22 unmittelbar (ohne weitere Zwischenschicht) auf dem ersten Textil 24a und dem zweiten Textil 24b angeordnet. Hierdurch wird der Gesamtaufbau und die Montage vereinfacht.

Das erste Textil 24a liegt auf der Oberseite eines ersten Spacerblocks **26a**; das zweite Textil 24b liegt auf der Oberseite eines zweiten Spacerblocks **26b**. Die Spacerblocks 26a, b sind wasserdurchlässig ausgebildet.

Die Spacerblocks 26a, b sind durch mehrere Blockverbindungsmittel verbunden, von denen ein erstes Blockverbindungsmittel mit dem Bezugszeichen **28** versehen ist. Die Blockverbindungsmittel 28 verspannen die Spacerblocks 26a, b zueinander, sodass kein Substrat 22 in einen Spalt zwischen das erste Textil 24a und das zweite Textil 24b rieselt.

Das erste Textil 24a und das zweite Textil 24b sind vorzugsweise gleich ausgebildet. Weiter bevorzugt sind die Spacerblocks 26a, 26b gleich ausgebildet.

Das erste Textil 24a und das zweite Textil 24b sind bevorzugt saugfähig ausgebildet, um das Wasser 14 zum Substrat 22 zu fördern, wo es von der Pflanze 12 aufgenommen werden kann. Eine Textil-Anordnung **30** aus den Spacerblocks 26a, b und den Textilien 24a, 24b ermöglicht somit eine Bewässerung der Pflanze 12 über einen langen Zeitraum.

Im vorliegenden Fall dient die Textil-Anordnung 30 weiterhin dem Halten eines Objekts **32**. Das Objekt 32 kann in Form eines Haustechnikgeräts, beispielsweise eines Wärmepumpenteils oder eines Klimaanlagenteils, ausgebildet sein. Alternativ dazu kann das Objekt in Form einer Absturzsicherung oder - wie in Fig. 1 dargestellt - eines Photovoltaikmoduls ausgebildet sein.

Das Objekt 32 wird über eine Halterung **33** an den Spacerblocks 26a, b gehalten, wobei die Halterung 33 über ein erstes Halterungsverbindungsmittel **34a** am ersten Spacerblock 26a und über ein zweites Halterungsverbindungsmittel **34b** am zweiten Spacerblock 26b befestigt ist. Die Halterungsverbindungsmittel 34a, b können jeweils in Form einer Schraube, insbesondere in Form einer gewindeschneidenden Schraube, ausgebildet sein. Besonders bevorzugt hintergreifen die Halterungsverbindungsmittel 34a, b die Spacerblocks 26a, b nicht (wie in Fig. 1 dargestellt), sodass sie besonders leicht montierbar sind.

Besonders bevorzugt wird das Substrat 22 aufgeblasen, wenn zwar die Halterungsverbindungsmittel 34a, b, aber noch nicht das Objekt 32 und die Halterung 33 montiert sind. Mithin sind die Montageschritte erfindungsgemäß entkoppelbar, indem zunächst nur die Halterungsverbindungsmittel 34a, b montiert werden. Das Substrat 22 kann in diesem Fall besonders leicht aufgebracht, insbesondere aufgeblasen, werden. Anschließend können dann die Halterung 33 und das Objekt 33 moniert werden.

Durch die (mittelbare) Anbindung des Objekts 32 an die Spacerblocks 26a, b muss das Objekt 32 nicht mehr zwingend an einem weiteren Gebäudeteil befestigt werden. Insbesondere muss die Folie 16 nicht durchbohrt werden, um das Objekt 32 zu befestigen.

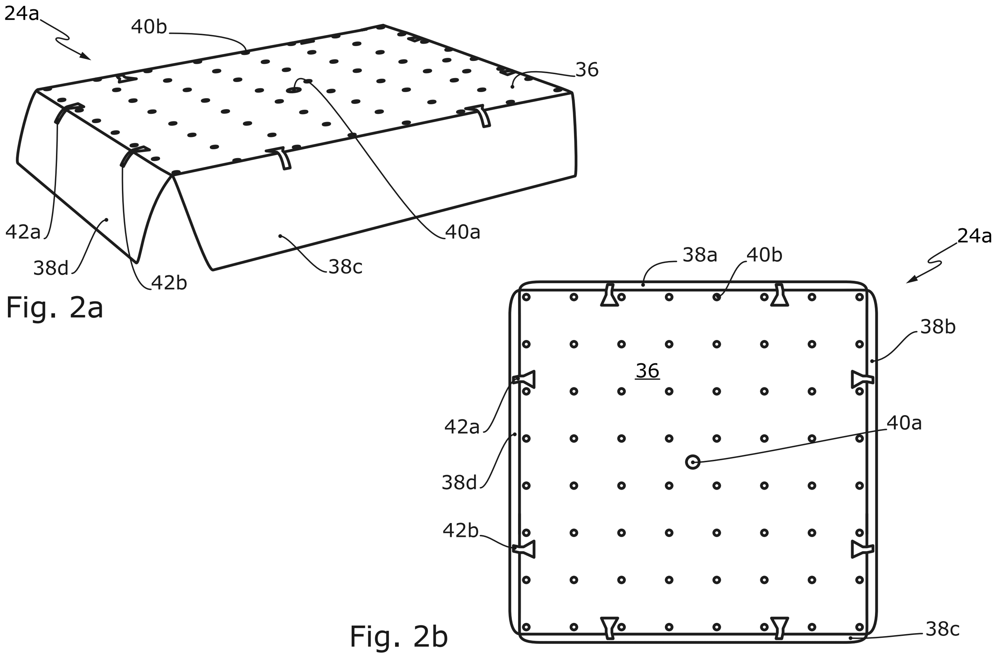

Die **Fign. 2a**, **2b** zeigen eine Ausführungsform eines ersten Textils 24a. Das erste Textil 24a weist vorzugsweise eine rechteckförmige, insbesondere - wie in den Fign. 2a, b gezeigt - quadratische Oberseite **36** auf. Die Oberseite 36 ist mit Seitenlappen **38a**, **38b**, **38c**, **38d**, insbesondere einstückig, verbunden. Im montierten Zustand der Textil-Anordnung 30 (siehe Fig. 1) ragen die Seitenlappen 38a-d nach unten, um gestautes Wasser ansaugen zu können (siehe Fig. 1 bei den Bezugszeichen 24a, b).

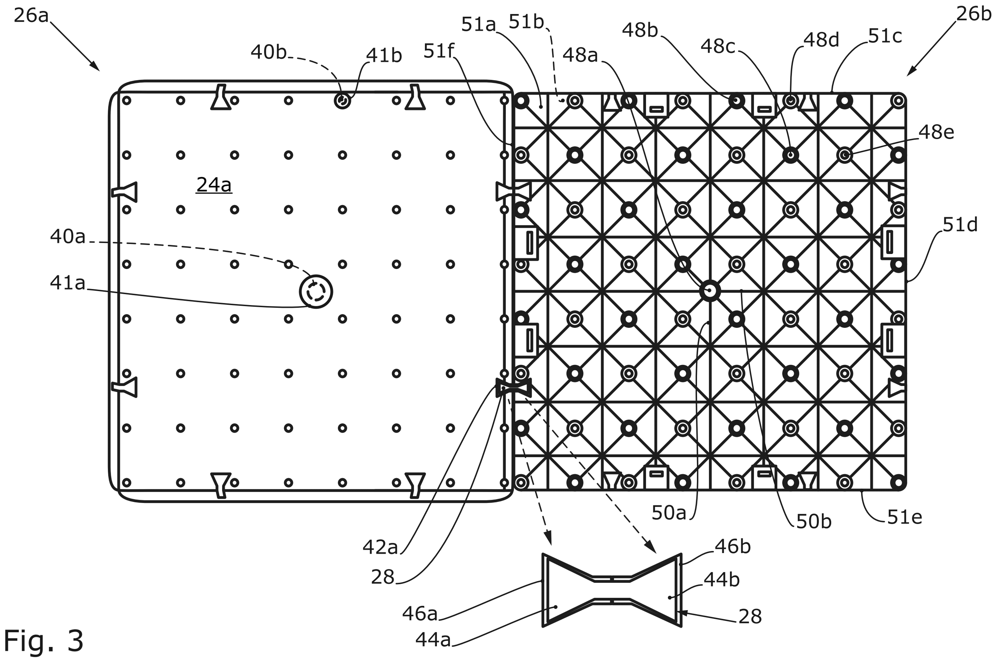

Das erste Textil 24a weist mehrere Durchgangsausnehmungen und/oder Markierungen auf, von denen in den Fign. 2a, b zwei mit Bezugszeichen **40a**, **40b** versehen sind. Durch die Durchgangsausnehmungen bzw. Markierungen 40a, b können jeweils ein Befestigungsmittel, beispielsweise ein Pin oder eine Schraube, geführt werden, um das erste Textil 24a am ersten Spacerblock 26a (siehe Fig. 3) zu fixieren. In Fig. 3 sind zwei Befestigungsmittel **41a**, **41b** gezeigt, die in die Durchgangsausnehmungen bzw. Markierungen 40a, b geführt sind. Wenn das erste Textil 24a am ersten Spacerblock 26a fixiert ist, kann eine solche Textil-Anordnung 30 (siehe Fig. 1a) besonders kompakt ausgeführt und leicht verlegt werden.

Die Durchgangsausnehmung(en) bzw. Markierung(en) 40a, b kann/können in Form von Prägungen, Schlitzen oder Bohrungen bzw. alternativ in Form von Beschriftung ausgebildet sein. Vorzugsweise weist das erste Textil 24a eine mittige Durchgangsausnehmung (hier 40a) im Zentrum der Oberseite 36 (siehe Fig. 2b) auf. Hierdurch kann das erste Textil 24a besonders positionstreu am ersten Spacerblock 26a gehalten werden.

Das erste Textil 24a weist weiterhin mehrere Spacer-Durchgangsausnehmungen auf, von denen in den Fign. 2a, b zwei mit Bezugszeichen **42a**, **42b** versehen sind. Die Spacer-Durchgangsausnehmungen 42a, b dienen dem erleichterten Verbinden zweier nebeneinander angeordneter Spacerblocks 26a, b (siehe Fig. 1). Dies wird nachfolgend im Zusammenhang mit Fig. 3 näher erläutert.

**Fig. 3** zeigt einen ersten Spacerblock 26a und einen zweiten Spacerblock 26b. Auf dem ersten Spacerblock 26a ist ein erstes Textil 24a angeordnet. Ein eigentlich auf dem zweiten Spacerblock 26b angeordnetes zweites Textil ist in Fig. 3 ausgeblendet, um die Verbindung zwischen den Spacerblocks 26a, b besser erläutern zu können.

Die beiden Spacerblocks 26a, b sind über mehrere Blockverbindungsmittel verbunden, von denen in Fig. 3 ein Blockverbindungsmittel 28 gezeigt ist. Das Blockverbindungsmittel 28 ist knochenförmig bzw. I-förmig ausgebildet. Es weist gegenüberliegende, miteinander verbundene Schwalbenschwänze **44a**, **44b** auf. Das Blockverbindungsmittel 28 ist vorzugsweise einstückig ausgebildet.

Das Blockverbindungsmittel 28 hintergreift sich zum Rand der Spacerblocks 26a, b hin verjüngende Ausnehmungen **46a**, **46b** der Spacerblocks 26a, b. Das Blockverbindungsmittel 28 durchgreift die Spacer-Durchgangsausnehmung 42a des ersten Textils 24a.

Aus Fig. 3 ist ersichtlich, dass der zweite Spacerblock 26b (ebenso wie der erste Spacerblock 26a) eine Vielzahl von vertikal verlaufenden Röhren aufweist, von denen in Fig. 3 fünf Röhren **48a**, **48b**, **48c**, **48d**, **48e** mit einem Bezugszeichen versehen sind. Die mittige Röhre 48a fluchtet mit der Durchgangsausnehmung 40a (siehe Fig. 2a), die Röhre 48b mit der Durchgangsausnehmung oder Markierung 40b (siehe Fig. 2a). Vorzugsweise fluchten mehrere Röhren 48a-e jeweils mit einer Durchgangsausnehmung oder Markierung 40a, b, insbesondere die meisten Röhren 48a-e, besonders bevorzugt alle Röhren 48a-e.

Die Röhren 48a-e können denselben Durchmesser oder unterschiedliche Durchmesser aufweisen. Im vorliegenden Fall weisen die Röhren 48b und 48c denselben Durchmesser auf und die Röhren 48d und 48e weisen ebenfalls denselben Durchmesser auf. Der zweite Spacerblock 26b weist ein Raster von Röhren eines ersten Durchmessers auf (hier beispielsweise mit den Röhren 48b, c). Weiterhin weist der zweite Spacerblock 26b ein dazu versetztes Raster von Röhren eines zweiten Durchmessers auf (hier beispielsweise mit den Röhren 48d, e). Die Röhren 48a-e sind durch Streben verbunden, von denen in Fig. 3 die Streben **50a**, **50b** mit einem Bezugszeichen versehen sind.

Die Röhren 48a-e weisen ihre Öffnungen vorzugsweise an der Oberseite **51a** und/oder der Unterseite **51b** des zweiten Spacerblocks 26b auf. Zwischen der Oberseite 51a und der Unterseite 51b, die die großen Hauptseiten des zweiten Spacerblocks 26b darstellen, verlaufen die Stirnseiten **51c**, **51d**, **51e**, **51f** des zweiten Spacerblocks 26b. Die Stirnseiten 51c-f erstrecken sich vorzugsweise senkrecht zur Längsrichtung der Streben 50a, b und parallel zur Längsrichtung der Röhren 48a-e.

Der zweite Spacerblock 26b kann einstückig, insbesondere aus Kunststoff, ausgebildet sein.

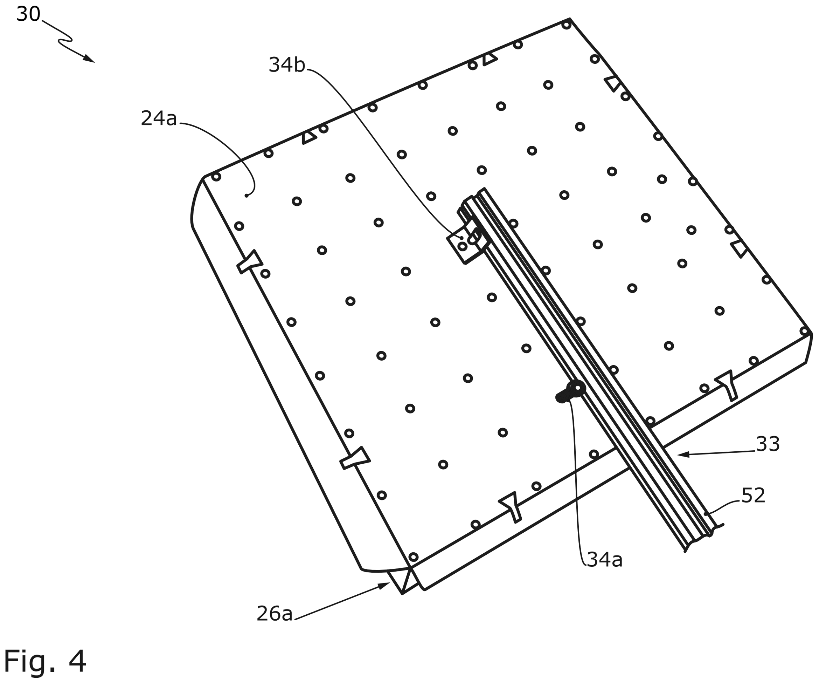

**Fig. 4** zeigt eine Textil-Anordnung 30 mit einem ersten Spacerblock 26a, auf dem ein erstes Textil 24a angeordnet ist. Eine Halterung 33 weist eine Schiene **52** auf, die sich über mehrere Spacerblocks (in Fig. 4 ist nur ein erster Spacerblock 26a dargestellt) erstreckt. Die Halterung 33 ist über mehrere Halterungsverbindungsmittel 34a (hier in Form einer Schraube), 34b (hier in Form eines Montagewinkels) am ersten Spacerblock 26a befestigt. Die Schiene 52 führt zu einer Versteifung mehrerer Spacerblocks (in Fig. 4 nicht gezeigt), sodass sie schwerer abgehoben bzw. hochgehebelt werden können. Ein Objekt 32 (siehe Fig. 1) ist dadurch sicherer befestigt. Die Schiene 52 kann in Form einer Profilschiene mit entlang ihrer Längsachse gleichem Querschnitt ausgebildet sein.

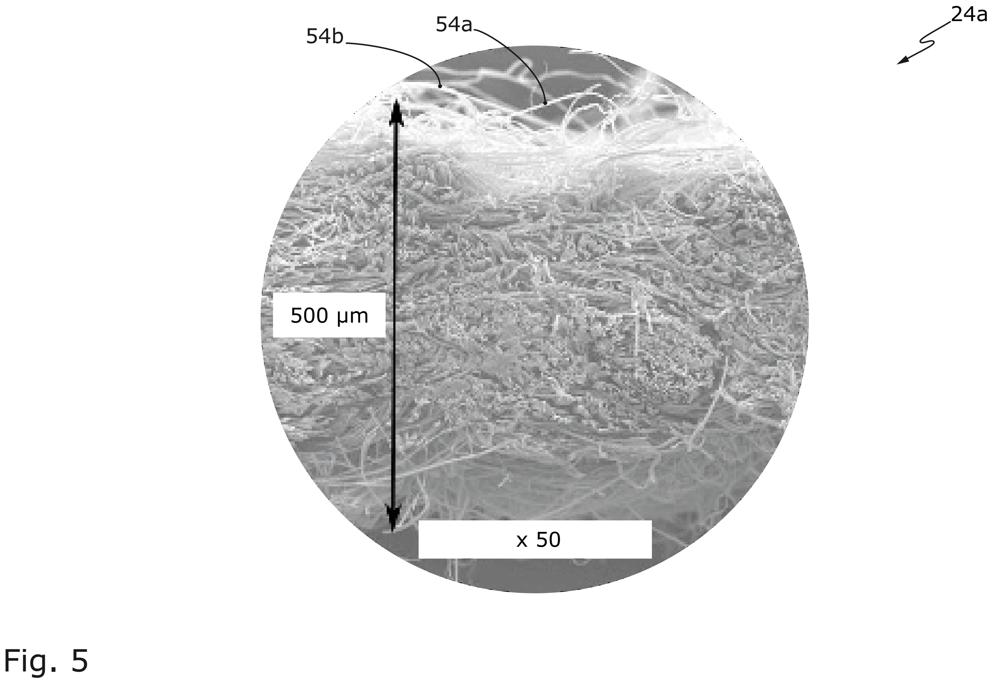

**Fig. 5** zeigt eine stark vergrößerte Aufnahme eines ersten Textils 24a. Aus Fig. 5 ist ersichtlich, dass das erste Textil 24a eine Vielzahl von Mikrofilamenten aufweist, von denen in Fig. 5 lediglich beispielhaft zwei Mikrofilamente **54a**, **54b** mit einem Bezugszeichen versehen sind. Vorzugsweise besteht das erste Textil 24a - wie im vorliegenden Fall - ausschließlich aus Mikrofilamenten 54a, b.

Das erste Textil 24a kann eine Dicke zwischen 0,1mm und 3mm, insbesondere zwischen 0,2mm und 2mm, vorzugsweise (wie gezeigt) zwischen 0,4mm und 1mm, aufweisen.

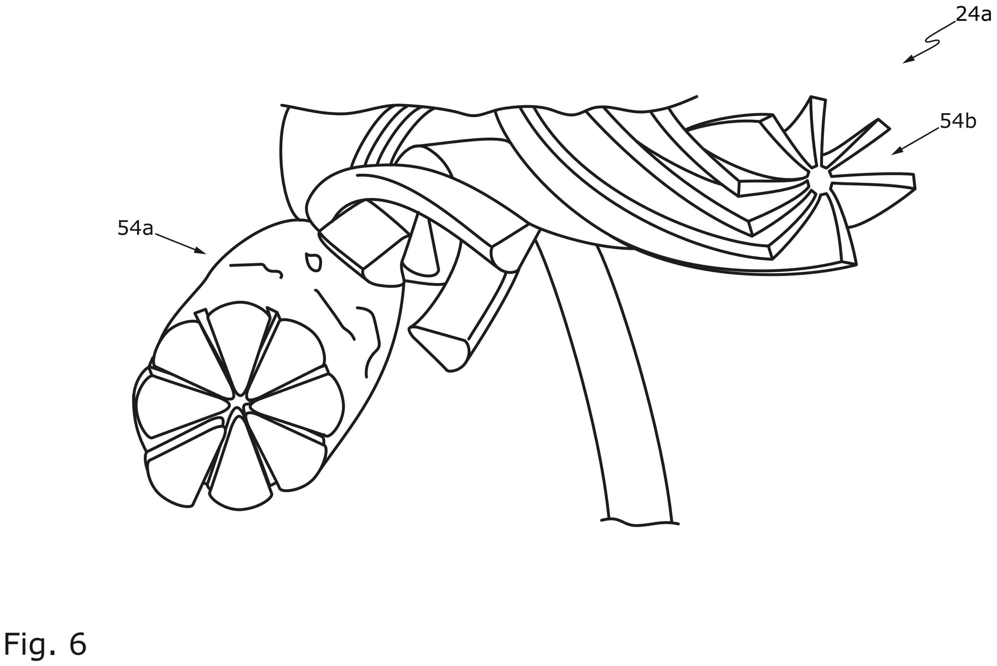

**Fig. 6** zeigt eine weiter vergrößerte Aufnahme des ersten Textils 24a. Gemäß Fig. 6 weist das Mikrofilament 54a einen Querschnitt in Form einer mehrere Pizzastücke aufweisenden Pizza und das Mikrofilament 54b einen sternförmigen Querschnitt auf. Die Mikrofilamente 54a, b sind vorzugsweise aus PET, insbesondere überwiegend aus PET, und PA ausgebildet. Das erste Textil 24a erzeugt in Wasser außergewöhnlich hohe Kapillarkräfte und ermöglicht Wasserförderraten von mehr als 4 l/m² am Tag.

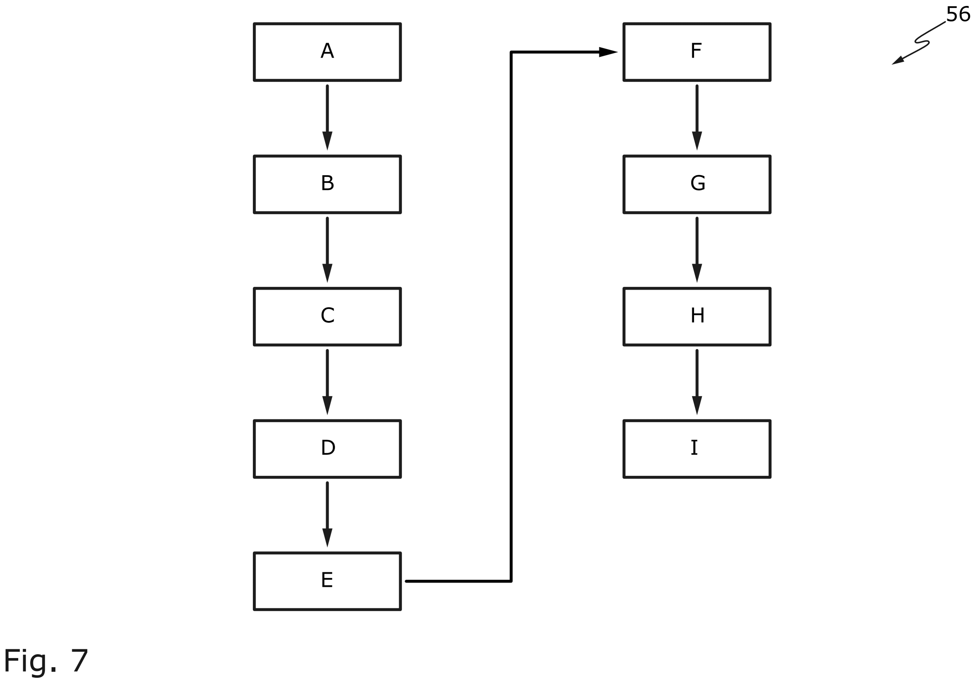

**Fig. 7** zeigt ein Verfahren **56** zur Herstellung einer Textil-Anordnung 30 gemäß der Zeichnung mit den Verfahrensschritten:
A) Spinnen von Endlos-Filamenten;
B) Ablegen der Endlos-Filamente auf einem Band;
C) Splitten und Verfestigen der Endlos-Filamente mit Hochdruck-Wasserstrahlen zu vernetzten Mikrofilamenten 54a, b in Form eines Textils;
D) Zuschneiden des Textils zu einem ersten Textil 24a und einem zweiten Textil 24b;
E) Anordnen des ersten Textils 24a auf einem ersten Spacerblock 26a und Anordnen des zweiten Textils 24b auf einem zweiten Spacerblock 26b;
F) Verbinden der Spacerblocks 26a, b mit einem Blockverbindungsmittel 28;
G) Befestigen einer Halterung 33 durch ein erstes Halterungsverbindungsmittel 34a am ersten Spacerblock 26a;
H) Auftragen des Substrats 22 auf dem ersten Textil 24a und dem zweiten Textil 24b;
I) Befestigen eines Objekts 32 an der Halterung 33.

Das Auftragen, insbesondere Aufblasen, des Substrats 22 vor der Installation des Objekts 32 vereinfacht signifikant die Abläufe bei der Begrünung eines Flachdachs 10. Denn ohne das Objekt 32 kann das Substrat 22, insbesondere durch einen Schlauch (nicht gezeigt), einfach und schnell flächig aufgetragen werden.

Unter Vornahme einer Zusammenschau aller Figuren der Zeichnung betrifft die Erfindung zusammenfassend eine Textil-Anordnung 30 zur Bewässerung einer Flachdach-Begrünung. Die Textil-Anordnung 30 weist ein erstes Textil 24a auf einem ersten Spacerblock 26a auf, wobei sich das erste Textil 24a zumindest an einer Stirnseite 51c des ersten Spacerblocks 26a, vorzugsweise an mehreren Stirnseiten 51c-f, insbesondere an allen Stirnseiten 51c-f, nach unten erstreckt, um angestautes Wasser auf einem Flachdach 10 durch Kapillarkräfte ansaugen zu können. Das erste Textil 24a ist besonders saugfähig, da es vernetzte Mikrofilamente 54a, b aufweist, die im Querschnitt die Form einer mehrere Pizzastücke aufweisenden Pizza aufweist oder im Querschnitt sternförmig ausgebildet ist. Die Mikrofilamente 54a, b können zumindest teilweise untereinander verschweißt sein. Vorzugsweise ist unmittelbar auf dem ersten Textil 24a ein Substrat 22 zum Anpflanzen einer Pflanze 12 angehäuft. In weiter bevorzugter Ausgestaltung der Erfindung sind mehrere Spacerblocks 26a, b mit jeweils einem hier beschriebenen, vorzugsweise gleichen, Textil 24a, b versehen und untereinander verbunden, um einen großflächigen, insbesondere spaltfreien, Verbund zu bilden.

### Bezugszeichenliste

- 10: Flachdach
- 12: Pflanze
- 14: Wasser
- 16: Folie
- 18: Ablauf mit Anstauvorrichtung
- 20: Drossel
- 22: Substrat
- 24a: erstes Textil
- 24b: zweites Textil
- 26a: erster Spacerblock
- 26b: zweiter Spacerblock
- 28: Blockverbindungsmittel
- 30: Textil-Anordnung
- 32: Objekt
- 33: Halterung
- 34a: erstes Halterungsverbindungsmittel
- 34b: zweites Halterungsverbindungsmittel
- 36: Oberseite
- 38a-d: Seitenlappen
- 40a, b: Durchgangsausnehmung oder Markierung
- 41a, b: Befestigungsmittel
- 42a, b: Spacer-Durchgangsausnehmung
- 44a, b: Schwalbenschwanz
- 46a, b: Ausnehmung
- 48a-e: Röhre
- 50a, b: Strebe
- 51a: Oberseite
- 51b: Unterseite
- 51c-f: Stirnseiten
- 52: Schiene
- 54a, b: Mikrofilament
- 56: Verfahren

## Patentansprüche

1. Textil-Anordnung (30) zur Flachdach-Begrünung, die Folgendes aufweist:
a) Einen ersten Spacerblock (26a);
b) ein erstes Textil (24a), das sich auf der Oberseite (51a) des ersten Spacerblocks (26a) erstreckt und sich weiterhin an einer ersten Stirnseite (51c) des ersten Spacerblocks (26a) nach unten erstreckt,
wobei das erste Textil (24a) vernetzte Mikrofilamente (54a, b) aufweist, die zumindest teilweise aus Polyester bestehen.

2. Textil-Anordnung nach einem der vorhergehenden Ansprüche, bei der sich das erste Textil (24a) an mehreren Stirnseiten (51c-f) des ersten Spacerblocks (26a) nach unten erstreckt.

3. Textil-Anordnung nach einem der vorhergehenden Ansprüche, bei der die Mikrofilamente (54a, b) im Querschnitt pizzaförmig oder sternförmig ausgebildet sind.

4. Textil-Anordnung nach einem der vorhergehenden Ansprüche, bei der die Mikrofilamente (54a, b) bi-komponentig ausgebildet sind.

5. Textil-Anordnung nach einem der vorhergehenden Ansprüche, bei der die Textil-Anordnung (30) ein Befestigungsmittel (41a, b) aufweist, das durch eine Durchgangsausnehmung (40a, b) des ersten Textils (24a) geführt und am ersten Spacerblock (26a) fixiert ist, um das erste Textil (24a) am ersten Spacerblock (26a) zu befestigen.

6. Textil-Anordnung nach einem der vorhergehenden Ansprüche, bei der das erste Textil (24a) einseitig oder beidseitig mit einer, zu den Mikrofilamenten (54a, b) beabstandeten, Folie versehen ist.

7. Textil-Anordnung nach einem der vorhergehenden Ansprüche, bei der die Textil-Anordnung (30) über dem ersten Textil (24a) ein Substrat (22) zum Anpflanzen einer Pflanze (12) aufweist.

8. Textil-Anordnung nach Anspruch 7, bei dem das Substrat (22) unmittelbar auf dem ersten Textil (24a) angeordnet ist.

9. Textil-Anordnung nach einem der vorhergehenden Ansprüche, bei der die Textil-Anordnung (30) einen zweiten Spacerblock (26b) aufweist, der mit dem ersten Spacerblock (26a) verbunden ist, wobei auf der Oberseite des zweiten Spacerblocks (26b) ein zweites Textil (24b) angeordnet ist, das sich an einer ersten Stirnseite (51c) des zweiten Spacerblocks (26b) nach unten erstreckt, wobei das zweite Textil (24b) vernetzte Mikrofilamente (54a, b) aufweist, die zumindest teilweise aus Polyester bestehen.

10. Flachdach (10) mit einer Textil-Anordnung (30) nach einem der vorhergehenden Ansprüche.

11. Verfahren (56) zur Herstellung einer Textil-Anordnung (30) nach einem der Ansprüche 1 bis 9 mit den Verfahrensschritten:
A) Spinnen von Endlos-Filamenten, die Polyester aufweisen;
B) Ablegen der Endlos-Filamente auf einem Band;
C) Splitten und Verfestigen der Endlos-Filamente mit Hochdruck-Wasserstrahlen zu den vernetzten Mikrofilamenten (54a, b);
D) Anordnen des ersten Textils (24a) mit den vernetzten Mikrofilamenten (54a, b) auf dem ersten Spacerblock (26a).

12. Verwendung einer Textil-Anordnung (30) nach einem der Ansprüche 1 bis 6 oder 9 als Unterlage für ein Substrat (22) zum Anpflanzen einer Pflanze (12).
